**Europäisches Patentamt**

**European Patent Office**

**Office européen des brevets**

(19)

(11) Veröffentlichungsnummer: **0 025 565**
A2

(12) # EUROPÄISCHE PATENTANMELDUNG

(21) Anmeldenummer: **80105289.5**

(22) Anmeldetag: **04.09.80**

(51) Int. Cl.³: **G 01 L 9/00**

(30) Priorität: **17.09.79 DE 2937484**

(43) Veröffentlichungstag der Anmeldung: **25.03.81**
**Patentblatt 81/12**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Fromm, Ingrid, Dipl.-Phys., Jawlenskystrasse 10, D-8000 München 71 (DE)**

(54) **Optische Vorrichtung zum Messen von Druckdifferenzen mittels Lichtintensitätsänderung.**

(57) Es liegt die Aufgabe zugrunde, eine optische Vorrichtung zum Messen geringer Druckdifferenzen zu schaffen, bei der ein unmittelbares Abtasten einer Meßkraft nicht erforderlich ist.

Der Lösung liegt der Gedanke zugrunde, daß einer der Kathetenflächen eines rechtwinklig-gleichschenkligen Glasprismas zugeführtes Licht im Regelfall totalreflektiert wird, so daß es praktisch verlustfrei aus der anderen Kathetenfläche des Glasprismas ausgekoppelt werden kann und daß bei Näherung einer lichtdurchlässigen oder lichtabsorbierenden Körperfläche an die Hypotenusenfläche des Glasprismas Lichtleistung über die Lücke zwischen der Hypotenusenfläche des Glasprismas und der genäherten Körperfläche auf Grund des bekannten Tunneleffektes ausgekoppelt werden kann. Die so ausgekoppelte Lichtleistung nimmt dabei mit abnehmendem Abstand zu. Bei Berührung der beiden Flächen tritt im Idealfall die gesamte in die erste Kathetenfläche eingekoppelte Lichtleistung durch die Hypotenusenfläche aus. Demnach ist es also möglich, mit sich änderndem Abstand der beiden Flächen die durchgelassene bzw. totalreflektierte Strahlungsleistung zu steuern.

Es sind zwei Glasprismen entsprechend angeordnet, wobei das eine Glasprisma an einer durch Druckeinwirkung auslenkbaren Membran befestigt ist.

SIEMENS AKTIENGESELLSCHAFT          Unser Zeichen

Berlin und München                  VPA 79 P 7 1 6 7

Optische Vorrichtung zum Messen geringer Druckdifferenzen mittels Lichtintensitätsänderung.

Die Erfindung betrifft eine optische Vorrichtung zum Messen geringer Druckdifferenzen mittels Lichtintensitätsänderung.

Das Messen von Druckdifferenzen erfolgte bisher im wesentlichen durch Manometer, bei denen die Auslenkung einer Membran unmittelbar dazu benutzt wird, eine Anzeigevorrichtung und/oder einen Regelmechanismus zu betätigen. Neben solchen jeweils mit einer Membran ausgestatteten Druck messenden Einrichtungen sind auch andere Druck messende Einrichtungen, wie beispielsweise solche nach dem piezokeramischen Prinzip arbeitende Einrichtungen bekannt. Den nach dem Prinzip der Membranbiegung arbeitenden Druck messenden Einrichtungen ist gemeinsam, daß sie auf Grund der unmittelbar mechanisch zu übertragenden Meßkraft hinsichtlich ihrer Empfindlichkeit für einige bestimmte Anwendungsfälle nicht ausreichend sind.

Pap 1 Plr/13.9.1979

0025565

Der vorliegenden Erfindung liegt die Aufgabe zugrunde, eine optische Vorrichtung zum Messen g e r i n g e r Druckdifferenzen zu schaffen, bei der ein unmittelbares Abtasten einer Meßkraft nicht erforderlich ist.

Der Erfindung liegt der Gedanke zugrunde, daß einer der Kathetenflächen eines rechtwinklig-gleichschenkligen Glasprisma zugeführtes Licht im Regelfall totalreflektiert wird, so daß es praktisch verlustfrei aus der anderen Kathetenfläche des Glasprisma ausgekoppelt werden kann und daß bei Näherung einer lichtdurchlässigen oder lichtabsorbierenden Körperfläche an die Hypotenusenfläche des Glasprisma Lichtleistung über die Lücke zwischen der Hypotenusenfläche des Glasprisma und der genäherten Körperfläche auf Grund des bekannten Tunneleffektes ausgekoppelt werden kann. Die so ausgekoppelte Lichtleistung nimmt dabei mit abnehmenden Abstand zu. Bei Berührung der beiden Flächen tritt im Idealfall die gesamte in die erste Kathetenfläche eingekoppelte Lichtleistung durch die Hypotenusenfläche aus. Demnach ist es also möglich, mit sich änderndem Abstand der beiden Flächen die durchgelassene bzw. totalreflektierte Strahlungsleistung zu steuern.

Die der Erfindung zugrundeliegende Aufgabe wird durch eine optische Vorrichtung zum Messen geringer Druckdifferenzen mittels Lichtintensitätsänderung gelöst, bei der ein in Bezug auf ein stabiles Gehäuseteil ortsfest angeordnetes, rechtwinklig-gleichschenkliges Glasprisma vorgesehen ist, in das über eine Eingangs-Glasfaser-Lichtleitung Licht in die eine Kathetenfläche einkoppelbar ist, bei dem eine Ausgangs-Glasfaser-Lichtleitung vorgesehen ist, über die Licht aus der anderen Kathetenfläche des Glasprisma auskoppelbar ist, bei dem eine durch Druckeinwirkung durchzubiegende, im Gehäuseteil gelagerte Membranfläche parallel zur Hypotenusenfläche des Glasprisma mit einem im Ruhezustand der Membran bestimmten Abstand, in dem etwa 50 % der eingekoppelten Lichtleistung total reflektiert werden, zur Hypotenusenfläche des Glasprisma angeordnet ist und bei dem die dem Glasprisma zugewandte Oberfläche der Membran zumindest im Bereich der Hypotenusenfläche des Glasprisma lichtdurchlässig oder lichtabsorbierend ist.

Die erfindungsgemäße optische Vorrichtung ist dadurch gekennzeichnet, daß zwischen der Membran und dem Gehäuseteil eine erste Kammer mit einem ersten Volumen und zwischen der Membran und einer Schutzkappe eine zweite Kammer mit einem zweiten Volumen vorgesehen sind, daß die erste Kammer mit einem druckdichten Verschluß gegenüber der Umgebung druckmäßig isolierbar ist, daß die Eingangs-Glasfaser-Lichtleitung an eine Lichtquelle vorgegebener Lichtleistung angeschlossen ist, daß der Druck in der ersten Kammer so eingestellt ist, daß die Membran bei einem mittleren in der zweiten Kammer herrschenden Druck innerhalb eines vorgegebenen Druckbereiches ihre Ruhelage einnimmt, und daß an die Ausgangs-Glasfaser-Lichtleitung eine die übertragene Lichtleistung bewertende Meßvorrichtung angeschlossen ist.

Die Erfindung bietet den Vorteil, daß Druckdifferenzen geringer Größe meßbar sind. Darüber hinaus ist der Vorteil gegeben, daß relativ schnelle Druckänderungen auf Grund der geringen Massenträgheit der optischen Vorrichtung - die Membran ist das einzige bewegte Teil - gemessen werden können. Beispielsweise können vorteilhafterweise Schalldruckmessungen vorgenommen werden.

Weiterbildungen der Erfindung sind durch die in den Unteransprüchen angegebenen Merkmale gekennzeichnet.

Im folgenden wird die Erfindung an Hand mehrerer, verschiedene Ausführungsbeispiele für die Erfindung betreffender Figuren erläutert.

Figur 1 zeigt ein rechtwinklig-gleichschenkliges Glasprisma, in dessen eine Kathetenfläche ein Lichtstrahl eingekoppelt wird, der an der Hypotenusenfläche totalreflektiert wird, so daß der Lichtstrahl praktisch verlustfrei aus der anderen Kathetenfläche des Glasprisma austritt.

Figur 2 zeigt zusätzlich zu dem in Figur 1 gezeigten Glasprisma ein weiteres rechtwinklig-gleichschenkliges Glasprisma, dessen Hypotenusenfläche der Hypotenusenfläche des zuerst genannten Glasprisma in der gezeigten Art angenähert ist. Dadurch wird ein Teil der eingekoppelten Lichtleistung durch den sog. Tunneleffekt in das weitere Glasprisma eingekoppelt und die restliche Lichtleistung aus der anderen Kathetenfläche des zuerst genannten Glasprisma ausgekoppelt.

Figur 3 zeigt den Idealfall einer 100%igen Auskoppelung der Lichtleistung über das berührende weitere Glasprisma in der gezeigten Weise.

Figur 4 zeigt ein erstes Ausführungsbeispiel für eine erfindungsgemäße optische Vorrichtung, bei der ein Glasprisma 3 vorgesehen ist, dessen einer Kathetenfläche Licht zugeführt und dessen anderer Kathetenfläche Licht entnommen wird und dessen Hypotenusenfläche die Hypotenusenfläche eines weiteren Glasprisma 2 gegenübersteht, das mit einer Prismenhalterung 6 an einer Membran 1 befestigt ist.

Figur 5 zeigt ein weiteres Ausführungsbeispiel für die Erfindung, bei dem das weitere Glasprisma entfallen kann und die Membran 1 direkt zur Auskoppelung bzw. Absorption von Lichtleistung benutzt werden kann.

Figur 6 zeigt ein weiteres Ausführungsbeispiel für die Erfindung, bei dem zur Erhöhung des Wirkungsgrades das Einkoppeln bzw. Auskoppeln von Lichtleistung über sog. Gradientenlinsen 9, 10 vorgesehen ist.

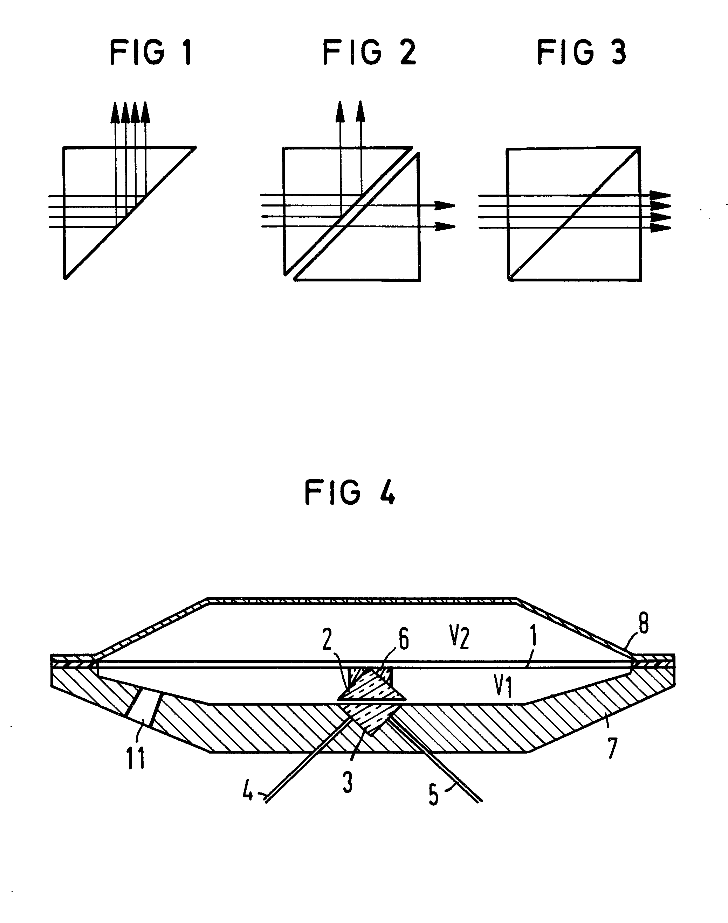

In dem Ausführungsbeispiel gemäß Figur 4 ist, wie bereits erläutert, ein rechtwinklig-gleichschenkliges Glasprisma 3 ortsfest in einer Halterung eines Gehäuseteils 7 der optischen Vorrichtung angeordnet. Das weitere Glasprisma 2 ist mit Hilfe einer Prismenhalterung 6 so an der Membran 1 befestigt, daß sich die Hypotenusenflächen der beiden Glasprismen 2, 3 flächenparallel mit einem im Ruhezustand der Membran 1 bestimmten Abstand, der kleiner als die Wellenlänge des verwendeten Lichtes ist, gegenüberliegen. Über eine Eingangs- Glasfaser-Lichtleitung 4 wird das Licht in die eine der Kathetenflächen des Glasprisma 3 eingekoppelt. Über eine Ausgangs-Glasfaser-Lichtleitung 5 wird das totalreflektierte Licht ausgekoppelt. Die Membran 1, die durch Druckeinwirkung durchbiegbar ist, überträgt diese Durchbiegung auf das weitere Glasprisma 2, wodurch der Abstand zwischen den Hypotenusenflächen der beiden Glasprismen 2, 3 den Druckeinwirkungen folgend verändert wird. Dabei wird entsprechend dem jeweiligen Abstand der beiden Hypotenusenflächen ein Teil der eingekoppelten Lichtleistung über die Ausgangs-Glasfaser-Lichtleitung 5 ausgekoppelt und der jeweilige Rest der eingekoppelten Lichtleistung durch das weitere Glasprisma 2 abgeführt. Die Membran 1 ist vorzugsweise in einem in dem Gehäuseteil 7 befestigten elastischen Silikonring 11 gelagert. Außerdem ist die Membran 1 durch eine Schutzkappe 8 gegen störende Einflüsse gesichert. Zwischen dem Gehäuseteil 7 und der Membran 1 ist eine erste Kammer $V_1$ mit einem ersten Volumen und zwischen der Membran 1 und der Schutzkappe 8 eine zweite Kammer $V_2$ mit einem zweiten Volumen angeordnet. Die erste Kammer $V_1$ ist mit einem druckdichten Verschluß 11 gegenüber der Umgebung druckmäßig isolierbar. Zur Einstellung dieser vorgegebenen Ruhelage der Membran 1, beispielsweise für einen mittleren innerhalb eines bestimmten Druckbereiches herrschenden Druck in der zweiten Kammer $V_2$ wird die erste Kammer $V_1$ mittels eines Hilfsmediums unter einen Referenzdruck gesetzt. Für die Ruhelage der Membran 1 wird ein Abstand zwischen den beiden Hypotenusenflächen angestrebt, durch den etwa 50 % der Lichtleistung total reflektiert werden.

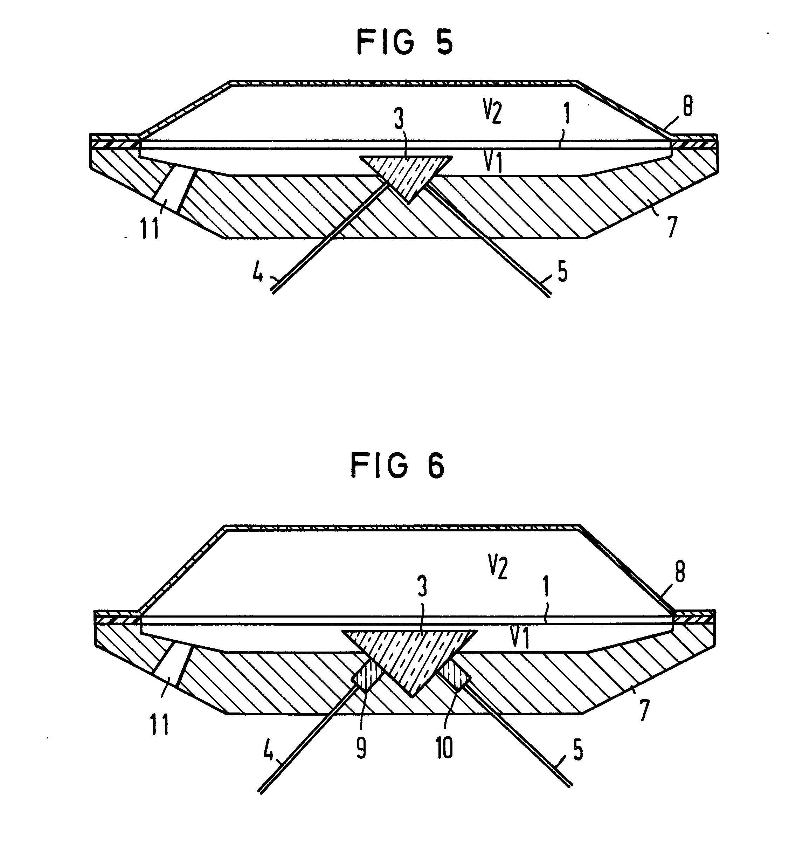

Wie bereits erläutert, zeigt Figur 5 ein weiteres Ausführungsbeispiel für die Erfindung, bei dem das weitere Glasprisma 2 eingespart ist. Zur Erzielung der Lichtintensitätsänderung ist die dem Glasprisma 3 zugewandte Oberfläche der Membran 1 zumindest im Bereich der Hypotenusenfläche des Glasprisma 3 lichtdurchlässig oder lichtabsorbierend.

Figur 6 zeigt, wie bereits erläutert, ein weiteres Ausführungsbeispiel für die Erfindung, bei dem die Eingangs-Glasfaser-Lichtleitung 4 und die Ausgangs-Glasfaser-Lichtleitung 5 nicht unmittelbar an die jeweils zugeordnete Kathetenfläche des Glasprisma 3, sondern vielmehr jeweils über eine sog. Gradientenlinse 9, 10 zur Erhöhung des Wirkungsgrades der Lichteinkoppelung bzw. -auskoppelung angeschlossen sind.

Zur Fixierung der Eingangs-Glasfaser-Lichtleitung 4 und der Ausgangs-Glasfaser-Lichtleitung 5 derart, daß beide untereinander und relativ zu der jeweils zugeordneten Kathetenfläche eine optimale Lage annehmen, sind in dem Gehäuseteil 7 Führungsnuten vorgesehen.

Zur Messung von Druckdifferenzen zwischen zwei Volumina
kann die erfindungsgemäße optische Vorrichtung vorteilhafterweise in ihrer Gesamtheit in eine Trennwand zwischen
beiden Volumina eingebaut sein, wobei der druckdichte
Verschluß 11 entfernt ist.

Ein besonderer Vorteil der erfindungsgemäßen optischen
Vorrichtung ist ihre große Empfindlichkeit. Da der
Prozentsatz des totalreflektierten Lichts von 0 bis 100
bei Auslenkungen in der Größenordnung der Lichtwellenlänge schwankt, sind nur sehr geringe Membranauslenkungen erforderlich. Eine Erhöhung der Empfindlichkeit ist
durch Verwendung dünnerer Membranen oder durch Licht
mit kürzerer Wellenlänge zu erreichen. Der dann resultierende geringe Dynamikbereich kann erweitert werden,
wenn durch Druckausgleich zwischen $V_1$ und $V_2$ wieder von
der Nullstellung ausgegangen wird.

Als Lichtquelle zum Einspeisen einer Lichtleistung in die
Eingangs-Glasfaser-Lichtleitung 4 kann vorteilhafterweise eine lichtemmitierende Diode (LED) verwendet werden. Desweiteren kann vorteilhafterweise als Lichtquelle
eine Laserdiode (LD) verwendet werden.

10 Patentansprüche
 6 Figuren

Patentansprüche.

1. Optische Vorrichtung zum Messen geringer Druckdifferenzen mittels Lichtintensitätsänderung, bei der ein in Bezug auf ein stabiles Gehäuseteil ortsfest angeordnetes, rechtwinklig-gleichschenkliges Glasprisma vorgesehen ist, in das über eine Eingangs-Glasfaser-Lichtleitung Licht in die eine Kathetenfläche einkoppelbar ist, bei dem eine Ausgangs-Glasfaser-Lichtleitung vorgesehen ist, über die Licht aus der anderen Kathetenfläche des Glasprisma auskoppelbar ist, bei dem eine durch Druckeinwirkung durchzubiegende, im Gehäuseteil gelagerte Membranfläche parallel zur Hypotenusenfläche des Glasprisma mit einem im Ruhezustand dem Membran bestimmten Abstand, in dem etwa 50 % der eingekoppelten Lichtleistung total reflektiert werden, zur Hypotenusenfläche des Glasprisma angeordnet ist und bei dem die dem Glasprisma zugewandte Oberfläche der Membran zumindest im Bereich der Hypotenusenfläche des Glasprisma lichtdurchlässig oder lichtabsorbierend ist, d a d u r c h   g e k e n n z e i c h n e t ,   daß zwischen der Membran (1) und dem Gehäuseteil (7) eine erste Kammer ($V_1$) mit einem ersten Volumen und zwischen der Membran (1) und einer Schutzkappe (8) eine zweite Kammer ($V_2$) mit einem zweiten Volumen vorgesehen sind, daß die erste Kammer ($V_1$) mit einem druckdichten Verschluß (11) gegenüber der Umgebung druckmäßig isolierbar ist, daß die Eingangs-Glasfaser-Lichtleitung (4) an eine Lichtquelle vorgegebener Lichtleistung angeschlossen ist, daß der Druck in der ersten Kammer ($V_1$) so eingestellt ist, daß die Membran (1) bei einem mittleren in der zweiten Kammer ($V_2$) herrschenden Druck innerhalb eines vorgegebenen Druckbereiches ihre Ruhelage einnimmt, und daß an die Ausgangs-Glasfaser-Lichtleitung (5) eine die übertragene Lichtleistung bewertende Meßvorrichtung angeschlossen ist.

2. Optische Vorrichtung nach Anspruch 1, d a d u r c h
g e k e n n z e i c h n e t , daß an der Membran (1)
ein weiteres rechtwinklig-gleichschenkliges Glasprisma
(2) mit Hilfe einer Prismenhalterung (6) so befestigt
ist, daß sich die Hypotenusenflächen der beiden Glasprismen (2, 3) flächenparallel mit einem im Ruhezustand
der Membran (1) bestimmten Abstand der gleich oder kleiner
als die Wellenlänge des verwendeten Lichtes ist, gegenüberliegen.

3. Optische Vorrichtung nach Anspruch 1 oder 2, d a -
d u r c h g e k e n n z e i c h n e t , daß der Abstand zwischen der Hypotenusenfläche des Glasprisma (3)
und der ihr zugewandten Oberfläche der Membran (1) bzw.
der Abstand zwischen der Hypotenusenfläche des Glasprisma (3) und der Hypotenusenfläche des weiteren Glasprisma (2) so bemessen ist, daß im Ruhezustand der Membran (1) etwa 50 % der Lichtleistung des über die Eingangs-Glasfaser-Lichtleitung (4) eingekoppelten Lichtes
totalreflektiert werden.

4. Optische Vorrichtung nach Anspruch 1 oder 2, d a -
d u r c h g e k e n n z e i c h n e t , daß die Ein-
gangs-Glasfaser-Lichtleitung (4) und die Ausgangs-Glasfaser-Lichtleitung (5) unmittelbar an die ihnen jeweils
zugeordnete Kathetenfläche des Glasprisma (3) angeschlossen sind.

5. Optische Vorrichtung nach Anspruch 1 oder 2, d a -
d u r c h g e k e n n z e i c h n e t , daß die Ein-
gangs-Glasfaser-Lichtleitung (4) und die Ausgangs-Glasfaser-Lichtleitung (5) jeweils über eine Eingangs-Gradientenlinse (9) bzw. eine Ausgangs-Gradientenlinse
(10) an die ihnen jeweils zugeordnete Kathetenfläche
des Glasprisma (3) angeschlossen sind.

0025565

6. Optische Vorrichtung nach einem der Ansprüche 1 bis 3, d a d u r c h   g e k e n n z e i c h n e t ,   daß die Membran (1) an ihrem Rand in einem an dem Gehäuseteil (7) befestigten elastischen Silikonring gelagert ist.

7. Optische Vorrichtung nach Anspruch 4 oder 5, d a - d u r c h   g e k e n n z e i c h n e t ,   daß die Eingangs-Glasfaser-Lichtleitung (4) und die Ausgangs-Glasfaser-Lichtleitung (5) mit Hilfe von im Gehäuseteil (7) dafür vorgesehenen Führungsnuten in einer optimalen relativen Lage zu den jeweils zugeordneten Kathetenflächen des Glasprisma (3) gehalten werden.

8. Optische Vorrichtung nach einem der vorhergehenden Ansprüche, d a d u r c h   g e k e n n z e i c h n e t ,   daß eine Druckdifferenzmessung derart ausführbar ist, daß die optische Vorrichtung in ihrer Gesamtheit in eine Trennwand zwischen zwei unter Druck stehenden Volumina eingebaut ist, wobei der druckdichte Verschluß (11) entfernt ist.

9. Optische Vorrichtung nach einem der vorhergehenden Ansprüche, d a d u r c h   g e k e n n z e i c h n e t ,   daß in die Eingangs-Glasfaser-Lichtleitung (4) Licht aus der Kohärenzlichtquelle, vorzugsweise einer Laser-Diode, eingekoppelt wird.

10. Optische Vorrichtung nach einem der Ansprüche 1 bis 8, d a d u r c h   g e k e n n z e i c h n e t ,   daß in die Eingangs-Glasfaser-Lichtleitung (4) Licht aus einer Inkohärenzlichtquelle, vorzugsweise einer lichtemmittierenden Diode (LED) eingekoppelt wird.

FIG 1        FIG 2        FIG 3

FIG 4

## FIG 5

## FIG 6